# FASCICULE DE BREVET EUROPEEN

(11) **EP 3 801 154 B1**
(45) Date de publication et mention de la délivrance du brevet: **20.07.2022**
(21) Numéro de dépôt: 19722138.5
(22) Date de dépôt: 09.05.2019
(51) Int. Cl.: A47J 37/10, A47J 27/00

(54) **RECIPIENT DE CUISSON COMPORTANT UN ELEMENT BIMETALLIQUE D'ALERTE SONORE**
KOCHGEFÄSS MIT EINEM BIMETALLELEMENT MIT HÖRBAREM ALARM
COOKING VESSEL COMPRISING AN AUDIBLE-ALERT BIMETALLIC ELEMENT

(30) Priorité: 25.05.2018 FR 1854446
(43) Date de publication de la demande: 14.04.2021
(73) Titulaire: SEB S.A., 69130 Ecully (FR)
(72) Inventeur: GUEGAN, Laurent, 74150 LORNAY (FR); BEZZI, Sassi, 74600 SEYNOD (FR); BILLOUD, Olivier, 73800 CRUET (FR); INCLAIR, Fabien, 73340 BELLECOMBE EN BAUGES (FR)
(74) Mandataire: SEB Développement
(86) Numéro de dépôt international: PCT/EP2019/061958
(87) Numéro de publication internationale: WO 2019/224011

(56) Documents cités:
- EP-A1- 0 364 684
- DE-U1- 20 303 311
- DE-U1-202016 107 466
- FR-A1- 3 033 995
- US-A1- 2007 095 215
- US-A1- 2017 231 415

## Description

La présente invention concerne un récipient de cuisson destiné à être disposé sur une plaque de cuisson, un brûleur ou analogue pour la cuisson d'aliments notamment une poêle, une casserole, une sauteuse, un faitout ou un autocuiseur, plus particulièrement un récipient de cuisson muni d'une calotte comportant un capteur, notamment de température.

On connaît du document JP3201143 un dispositif d'alerte d'atteinte d'une température prédéterminée destiné à être agencé sur le fond d'un récipient de cuisson lors d'une préchauffe. Le dispositif comporte un élément bimétallique prenant une première position stable froide lorsque la température est inférieure à une température prédéterminée et basculant dans une deuxième position stable chaude lorsque la température est supérieure à la température prédéterminée. Le basculement de l'élément bimétallique libère un marteau qui frappe une cloche pour émettre un signal sonore adapté pour être perçu par l'utilisateur.

Cependant, le bon fonctionnement du dispositif d'alerte est dépendant de la qualité de l'échange thermique avec le fond du récipient de cuisson, notamment la planéité du fond.

De plus, si l'utilisateur place un aliment, par exemple de la matière grasse dans le récipient de cuisson, l'aliment peut se loger entre le fond du récipient de cuisson et une face d'appui du dispositif et ainsi perturber le basculement de l'élément bimétallique.

On peut également noter que le dispositif d'alerte présente une construction compliquée.

DE202016107466U1 représente l'état de l'art le plus proche et divulgue le préambule de la revendication 1.

Le but de la présente invention est de remédier aux inconvénients précités et de proposer un récipient de cuisson comportant un dispositif d'alerte d'atteinte d'une température prédéterminée qui présente un fonctionnement fiable et répétitif, durable dans le temps.

Un autre but de l'invention est de proposer un récipient de cuisson comportant un dispositif d'alerte d'atteinte d'une température prédéterminée qui soit de conception simple et économique à mettre en œuvre.

Ces buts sont atteints avec un récipient de cuisson comportant une calotte munie d'un fond, caractérisé en ce que le fond comporte un logement de réception d'au moins un élément bimétallique prenant une première position stable froide lorsque la température est inférieure à une température prédéterminée et basculant dans une deuxième position stable chaude lorsque la température est supérieure à la température prédéterminée et réciproquement, le passage de la première position stable à la deuxième position stable générant un signal sonore adapté pour être perçu par un utilisateur ou par un dispositif externe.

L'au moins un élément bimétallique est intégré dans le fond du récipient de cuisson pour former un dispositif d'alerte sonore d'atteinte d'une température prédéterminée. Ainsi, le dispositif d'alerte sonore ne peut être dissocié du récipient de cuisson et être perdu ou égaré. Le dispositif d'alerte sonore fonctionne de manière autonome, sans intervention de l'utilisateur.

De plus, l'au moins un élément bimétallique est agencé dans l'épaisseur du fond, à l'endroit le plus représentatif de la température du fond.

Par l'au moins un élément bimétallique bascule de la première position stable froide dans la deuxième position stable chaude, on comprend que le changement de position se fait dans un temps très court, de manière brusque. Ainsi, le signal sonore est court mais avec une forte intensité.

Lors du basculement, l'élément bimétallique vient frapper au moins une paroi du logement de réception pour émettre le signal sonore.

De manière avantageuse, l'au moins un élément bimétallique émet un signal sonore, dont le niveau sonore est compris entre 65 et 75 dB, de préférence 69 dB.

De préférence, la température prédéterminée à laquelle l'au moins un élément bimétallique bascule de la première position stable froide dans la deuxième position stable chaude est comprise entre 220 et 260°C, de préférence 230°C. Une telle température prédéterminée correspond à une température de surcuisson de l'aliment à préparer qui entraine un risque de brulage de l'aliment et un risque de surchauffe du récipient de cuisson, notamment si le fond comporte un revêtement antiadhésif de type PTFE.

Avantageusement, l'au moins un élément bimétallique est libre dans le logement de réception.

Ainsi, lors du basculement de la première position stable froide dans la deuxième position stable chaude, l'élément bimétallique vient frapper les parois du logement de réception pour émettre le signal sonore.

De préférence, l'au moins un élément bimétallique prend la forme d'une partie de sphère.

Pour obtenir cette forme, on découpe un disque de diamètre D dans une feuille constituée de deux couches de deux matériaux ayant des coefficients de dilatation différents et on emboutit le disque pour que l'au moins un élément bimétallique prenne la forme d'une partie de sphère de hauteur H.

Ainsi, dans la première position stable froide, l'au moins un élément bimétallique prend la forme d'une partie de sphère incurvée dans un sens et dans la deuxième position stable chaude, l'au moins un élément bimétallique prend la forme d'une partie de sphère incurvée dans le sens opposé.

La demanderesse a mis en évidence qu'avec une telle forme pour l'élément bimétallique, le basculement de la première position stable froide dans la deuxième position stable chaude se fait dans un temps très court, de manière brusque.

Avantageusement, le fond comporte au moins deux éléments bimétalliques basculant de leur première position stable froide vers leur deuxième position stable chaude à deux températures prédéterminées différentes.

Ainsi, le dispositif d'alerte sonore peut émettre deux signaux sonores successifs lors de l'atteinte d'une première température prédéterminée à laquelle un premier élément bimétallique bascule, puis lors de l'atteinte d'une deuxième température prédéterminée à laquelle un deuxième élément bimétallique bascule.

De manière avantageuse, la première température prédéterminée à laquelle le premier élément bimétallique bascule est comprise entre 220 et 240°C, de préférence 230°C et la deuxième température prédéterminée à laquelle le deuxième élément bimétallique bascule est comprise entre 240 et 260°C, de préférence 250°C.

De préférence, les au moins deux éléments bimétalliques sont agencés dans le même logement de réception.

Avantageusement, le logement est formé par une cavité fermée par une plaque.

Cette disposition permet de réaliser une cavité fermée faisant office de caisse de résonnance.

De manière avantageuse, la plaque présente une épaisseur comprise 0,5 et 2 mm.

La demanderesse a mis en évidence qu'une telle épaisseur permettait d'amplifier le signal sonore généré par le basculement de l'élément bimétallique.

De manière avantageuse, la plaque est réalisée en aluminium.

De préférence, la plaque est agencée sur une face inférieure du fond.

Ainsi, la face inférieure reçoit la plaque avec des dispositifs de fixation pour laisser une face supérieure du fond destinée à recevoir les aliments uniforme et lisse.

Avantageusement, la plaque comporte une bordure périphérique s'étendant perpendiculairement à la plaque, la bordure périphérique comportant une partie d'accrochage destinée à coopérer avec une zone de la cavité comprenant un profil en contre dépouille.

Ainsi, l'assemblage de la plaque se fait simplement, par une opération de clipage.

De préférence, la plaque est fixée sur le fond par une opération de soudure.

Une telle disposition permet d'agencer la plaque sur une face inférieure du fond ou sur une surface supérieure du fond, notamment sous une couche de revêtement antiadhésif.

Avantageusement, la plaque comporte des perforations et le fond comporte des plots, les perforations étant destinées à être assemblées sur les plots pour fixer la plaque sur le fond par une opération de frappe.

Les plots permettent de réaliser un sertissage de la plaque perforée sur le fond par frappe en mettant en œuvre une presse développant un tonnage suffisamment faible pour ne pas déformer le logement de réception.

Avantageusement, la plaque comporte des perforations d'accroche comprenant un bord interne incliné, la plaque étant destinée à être encastrée dans le fond par une opération de frappe de manière à ce que les perforations d'accroche soient remplies de matière du fond.

Cette disposition permet de rapporter la plaque dans le fond par une seule opération de frappe.

De préférence, la cavité comporte une paroi munie d'un taraudage et la paroi comporte une bordure externe filetée, la plaque étant assemblée dans la cavité par vissage.

Avantageusement, le récipient de cuisson est une poêle, une casserole, une sauteuse, un faitout ou un autocuiseur.

De préférence, le dispositif externe est un smartphone.

Ainsi, le smartphone comporte une application dédiée qui capte le signal sonore lors du basculement de l'élément bimétallique pour fournir à l'utilisateur des informations ou signaux complémentaires.

L'invention sera mieux comprise à l'étude des modes de réalisation pris à titre nullement limitatif et illustrés dans les figures annexées dans lesquelles :
La figure 1 illustre une vue en perspective d'un récipient de cuisson selon un premier mode de réalisation de l'invention.
La figure 2a illustre une vue de détail en coupe selon la ligne II-II du récipient de cuisson de la figure 1, l'élément bimétallique étant dans une première position stable froide.
La figure 2b illustre une vue de détail en coupe selon la ligne II-II du récipient de cuisson de la figure 1, l'élément bimétallique étant dans une deuxième position stable chaude.
La figure 3 illustre une vue en perspective de la plaque du récipient de cuisson de la figure 1.
La figure 4 illustre une vue de détail en coupe selon la ligne II-II du récipient de cuisson de la figure 1, le récipient de cuisson comportant deux éléments bimétalliques.
La figure 5 illustre une vue de détail en coupe du récipient de cuisson de la figure 1 selon un deuxième mode de réalisation de l'invention.
La figure 6 illustre une vue de détail en coupe du récipient de cuisson de la figure 1 selon un troisième mode de réalisation de l'invention.

La figure 7 illustre une vue de détail en coupe et en perspective du récipient de cuisson de la figure 1 selon un quatrième mode de réalisation de l'invention.

On notera que, dans ce document, les termes «horizontal», «vertical», «inférieur», «supérieur», «longitudinal», «transversal», «haut», «bas», employés pour décrire le récipient de cuisson, font référence à ce récipient de cuisson en situation d'usage, lorsqu'il est posé sur un plan horizontal.

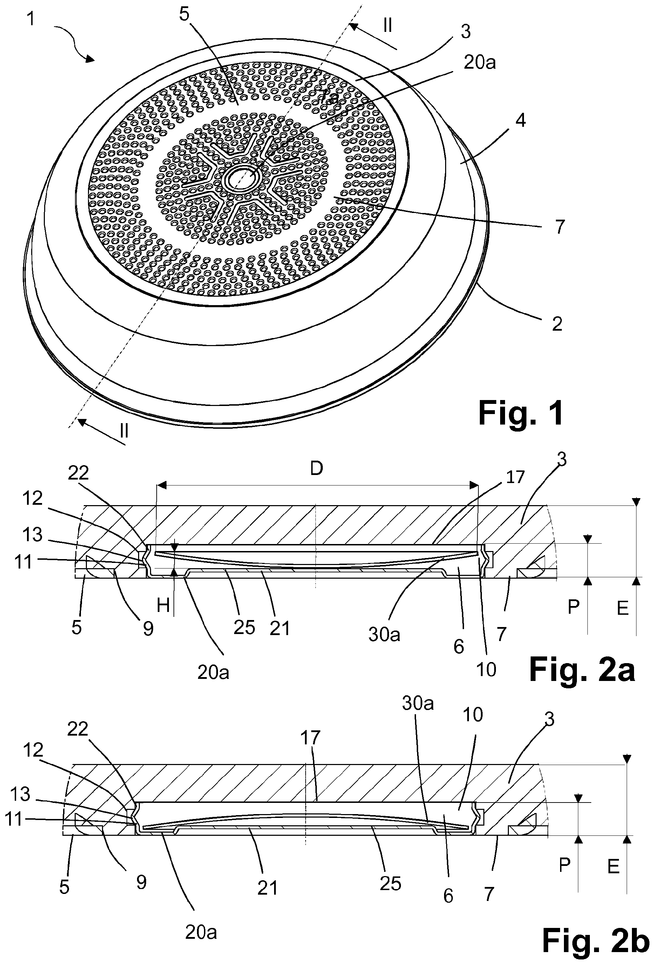

Tel que visible aux figures 1 à 7, un récipient de cuisson 1 comporte une calotte 2 comprenant un fond 3 et une paroi latérale 4. La calotte 2 est réalisée en aluminium, par exemple par frappe d'un disque ou par une opération de fonderie. Le fond 3 comporte une plaque métallique 5 perforée fixée par frappe sur le fond 3. La plaque métallique 5 est réalisée en inox ferromagnétique pour assurer la compatibilité avec un moyen de chauffage par induction. Le récipient de cuisson 1 comporte une poignée (non illustrée sur les figures) qui s'étend radialement à la calotte 2 suivant une direction longitudinale. La poignée est agencée sur la paroi latérale 4 de la calotte 2 par des moyens de fixation.

Le fond 3 présente une épaisseur E dans laquelle est agencé un logement 6 de réception d'un élément bimétallique 30a, 30b. Le logement 6 de réception est agencé au centre du fond 3, sur une face inférieure 7 du fond 3. Le logement 6 de réception est positionné à l'intérieur d'un dégagement circulaire 9 de la plaque métallique 5 perforée. Le logement 6 de réception comporte une cavité 10 cylindrique de profondeur P fermée par une plaque 20a, 20b, 20c, 20d. Le logement 6 comporte une paroi 17 supérieure et une paroi 25 inférieure appartenant à la plaque 20a, 20b, 20c, 20d. De manière avantageuse, le rapport de la profondeur P de la cavité 10 sur l'épaisseur E du fond 3 est inférieur à 0,5. A titre d'exemple, la cavité présente une profondeur P égale à 1.5 mm, le fond 3 présente une épaisseur pouvant varier de 3.5 à 10 mm.

L'élément bimétallique 30a, 30b présente une première position stable froide (Fig.2a) lorsque la température est inférieure à une température prédéterminée et bascule dans une deuxième position stable chaude (Fig.2b) lorsque la température est supérieure à la température prédéterminée et réciproquement. Le passage de la première position stable à la deuxième position stable génère un signal sonore dont la fréquence et le niveau sonore sont adaptés pour être perçus par un utilisateur ou par un dispositif externe. L'élément bimétallique 30a, 30b vient frapper la paroi 17 supérieure et la paroi 25 inférieure du logement 6 de réception pour émettre le signal sonore. De manière avantageuse, l'élément bimétallique 30a est calibré pour que la température prédéterminée de basculement corresponde à une température de surcuisson de l'aliment à préparer qui peut entrainer un risque de brulage de l'aliment et un risque de surchauffe du récipient de cuisson, notamment si le fond comporte un revêtement antiadhésif de type PTFE.

Dans les modes de réalisation illustrés, l'élément bimétallique 30a, 30b prend la forme d'une partie de sphère incurvée vers le bas dans la première position froide (Fig.2a) et l'élément bimétallique 30a, 30b prend la forme d'une partie de sphère incurvée vers le haut dans la deuxième position stable chaude. Pour obtenir cette forme, on découpe un disque de diamètre D dans une feuille constituée de deux couches de deux matériaux ayant des coefficients de dilatation différents. De préférence, le diamètre du disque est compris entre 20 et 40 mm et l'épaisseur du disque est comprise entre 0.2 et 0.35 mm. Le disque est ensuite embouti pour que l'élément bimétallique 30a, 30b prenne la forme d'une partie de sphère de hauteur H.

La plaque 20a, 20b, 20c, 20d de fermeture comporte une partie centrale 21 circulaire de diamètre légèrement supérieur au diamètre D du disque formant l'élément bimétallique 30a, 30b. La plaque 20a, 20b, 20c, 20d est de préférence réalisée en aluminium et présente une épaisseur comprise entre 0,5 et 2 mm.

Dans le premier mode de réalisation illustré aux figures 1 à 4, la plaque 20a de fermeture comporte une bordure périphérique 22 s'étendant perpendiculairement à la plaque 20a. La cavité 10 comporte une paroi latérale 11 dans laquelle est réalisée une gorge 12. La bordure périphérique 22 comporte une partie d'accrochage formée par une excroissance radiale externe 13 destinée à coopérer avec la gorge 12. La plaque 20a est assemblée par un montage en force dans la cavité 10, en poussant la plaque 20a jusqu'à ce que l'excroissance radiale externe se bloque dans la gorge 12.

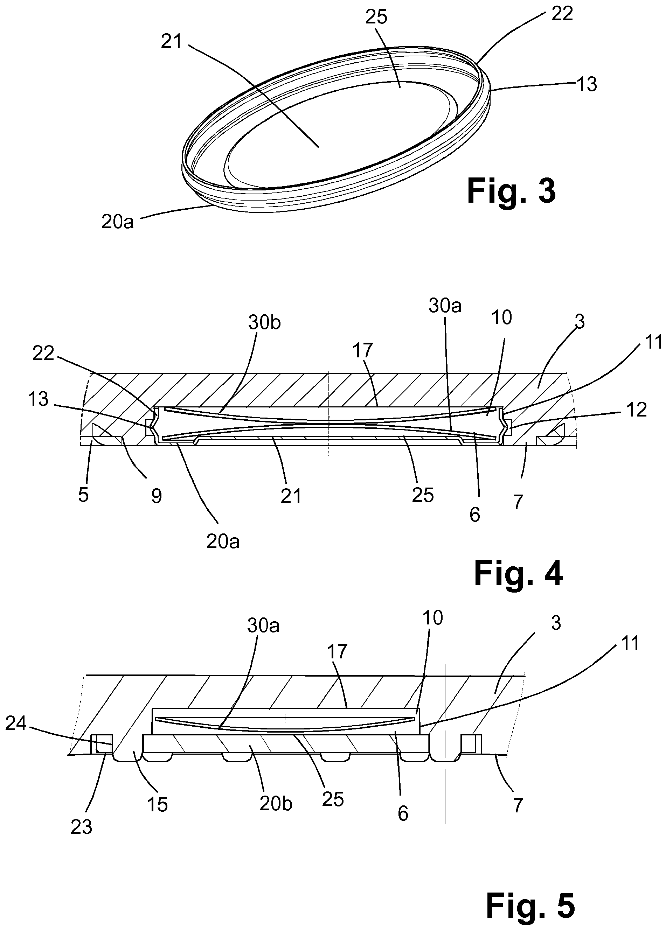

Tel que visible à la figure 4, le logement 6 reçoit des premier 30a et deuxième 30b éléments bimétalliques basculant de leur première position stable froide vers leur deuxième position stable chaude respectivement à des première et deuxième températures prédéterminées. De manière avantageuse, la première température prédéterminée à laquelle le premier élément bimétallique 30a bascule est légèrement inférieure à la deuxième température prédéterminée à laquelle le deuxième élément bimétallique 30b bascule, par exemple, la première température prédéterminée est comprise entre 220 et 240°C, de préférence 230°C et la deuxième température prédéterminée est comprise entre 240 et 260°C, de préférence 250°C. La deuxième température prédéterminée correspond à la température maximum à ne pas dépasser, notamment pour préserver un revêtement antiadhésif agencé sur la face supérieure du fond.

Ainsi, lors de la préchauffe du récipient de cuisson 1, un premier signal sonore d'atteinte de la première température prédéterminée est émis par le premier élément bimétallique 30a, correspondant à l'introduction des aliments (Fig.4) et, dans le cas où l'utilisateur n'a pas perçu le premier signal, un deuxième signal sonore d'atteinte de la deuxième température prédéterminée est émis par le deuxième élément bimétallique 30b pour inviter l'utilisateur à baisser la puissance de chauffe.

Dans un deuxième mode de réalisation illustré à la figure 5, la plaque 20b comporte un bord externe 23 comprenant des perforations 24 et le fond 3 comporte des plots 15. Les perforations 24 sont destinées à être assemblées sur les plots 15 (Fig.5). Une opération de frappe pour déformer les plots 15 permet de sertir la plaque 20b sur le fond 3.

Dans le cas où la calotte 2 est réalisée par frappe d'un disque en aluminium, la cavité 10 et les plots 15 peuvent être issus de l'opération de frappe. Dans le cas où la calotte 2 est réalisée par une opération de fonderie, la cavité 10 et les plots 15 peuvent être réalisés directement dans le moule.

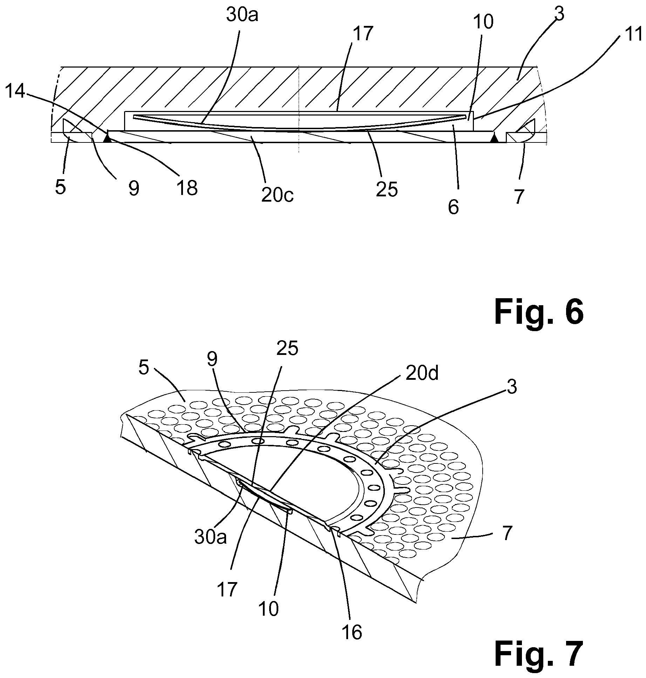

Dans un troisième mode de réalisation illustré à la figure 6, la cavité 10 comporte un épaulement 14 destiné à recevoir la plaque 20c qui prend la forme d'un disque. La plaque 20c est fixée sur le fond 3 par une opération de soudure, notamment une opération de soudure laser, une opération de soudure TIG (Tungsten Inert Gas) ou une opération de soudure MIG (Metal Inert Gaz). L'opération de soudure forme un cordon de soudure 18 entre le fond 3 et la plaque 20c.

Dans un quatrième mode de réalisation, la plaque 20d comporte des perforations d'accroche 16. La plaque 20d est destinée à être encastrée dans le fond 3 par une opération de frappe de manière à ce que les perforations d'accroche 16 soient remplies de matière du fond 3. De manière avantageuse, les perforations d'accroche 16 comprennent un bord interne incliné.

Dans une variante de réalisation, l'utilisateur est assisté d'un dispositif externe au récipient de cuisson, notamment par un smartphone L'utilisateur peut démarrer une application dédiée sur le smartphone qu'il laisse à proximité de la table de cuisson. Lorsque le fond atteint la température prédéterminée, l'élément bimétallique émet le signal sonore qui est perçu par le smartphone. Le smartphone relaie alors l'information par le biais d'une alarme que l'utilisateur doit acquitter. Ainsi, si l'utilisateur était momentanément absent lors de l'émission du signal sonore, il serait tout de même prévenu par cette alarme du dépassement de température.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention telle que définie par les revendications ci-jointes.

Ainsi, dans une variante de réalisation, la cavité comporte une paroi munie d'un taraudage et la paroi comporte une bordure externe filetée, la plaque étant assemblée dans la cavité par vissage.

Dans une autre variante de réalisation, le récipient de cuisson est formé par une cuve amovible d'un cuiseur à riz électrique.

## Revendications

1. Récipient de cuisson (1) comportant une calotte (2) munie d'un fond (3), le fond (3) comportant un logement (6) de réception d'au moins un élément bimétallique (30a, 30b) prenant une première position stable froide lorsque la température est inférieure à une température prédéterminée et basculant dans une deuxième position stable chaude lorsque la température est supérieure à la température prédéterminée et réciproquement, le passage de la première position stable à la deuxième position stable générant un signal sonore adapté pour être perçu par un utilisateur ou par un dispositif externe, **caractérisé en ce que** l'élément bimétallique (30a, 30b) vient frapper au moins une paroi (17, 25) du logement (6) de réception pour émettre le signal sonore.

2. Récipient de cuisson (1) selon la revendication 1, **caractérisé en ce que** l'au moins un élément bimétallique (30a, 30b) est libre dans le logement (6) de réception.

3. Récipient de cuisson (1) selon l'une quelconque des revendications précédentes, **caractérisé en ce que** l'au moins un élément bimétallique (30a, 30b) prend la forme d'une partie de sphère.

4. Récipient de cuisson (1) selon l'une quelconque des revendications précédentes, **caractérisé en ce que** le fond (3) comporte au moins deux éléments bimétalliques (30a, 30b) basculant de leur première position stable froide vers leur deuxième position stable chaude à deux températures prédéterminées différentes.

5. Récipient de cuisson (1) selon l'une quelconque des revendications précédentes, **caractérisé en ce que** le logement (6) est formé par une cavité (10) fermée par une plaque (20a, 20b, 20c, 20d).

6. Récipient de cuisson (1) selon la revendication 5, **caractérisé en ce que** la plaque (20a, 20b, 20c, 20d) est agencée sur une face inférieure (7) du fond.

7. Récipient de cuisson (1) selon l'une quelconque des revendications 5 à 6, **caractérisé en ce que** la plaque (20a) comporte une bordure périphérique (22) s'étendant perpendiculairement à plaque (20a), la bordure périphérique (22) comportant une partie d'accrochage (13) destinée à coopérer avec une zone (12) de la cavité (10) comprenant un profil en contre dépouille.

8. Récipient de cuisson (1) selon l'une quelconque des revendications 5 à 6, **caractérisé en ce que** la plaque (20b) comporte des perforations (24) et le fond (3) comporte des plots (15), les perforations (24) étant destinées à être assemblées sur les plots (15) pour fixer la plaque (20b) sur le fond (3) par une opération de frappe.

9. Récipient de cuisson (1) selon l'une quelconque des revendications 5 à 6, **caractérisé en ce que** la plaque (20c) est fixée sur le fond (3) par une opération de soudure.

10. Récipient de cuisson (1) selon l'une quelconque des revendications 5 à 6, **caractérisé en ce que** la plaque (20d) comporte des perforations d'accroche (16), la plaque (20d) étant destinée à être encastrée dans le fond (3) par une opération de frappe de manière à ce que les perforations d'accroche (16) soient remplies de matière du fond (3).

11. Récipient de cuisson (1) selon l'une des revendications 1 à 10, **caractérisé en ce qu'**il est une poêle, une casserole, une sauteuse, un faitout ou un autocuiseur.

12. Récipient de cuisson (1) selon l'une des revendications 1 à 11, **caractérisé en ce que** le dispositif externe est un smartphone.

## Patentansprüche

1. Kochgefäß (1), umfassend ein mit einem Boden (3) ausgestattetes Schutzgehäuse (2), wobei der Boden (3) eine Aufnahme (6) zum Empfang mindestens eines Bimetallelements (30a, 30b) umfasst, das eine kalte stabile erste Position einnimmt, wenn die Temperatur niedriger ist als eine vorbestimmte Temperatur, und in eine heiße stabile zweite Temperatur übergeht, wenn die Temperatur höher ist als die vorbestimmte Temperatur, und umgekehrt, wobei der Übergang von der stabilen ersten Position in die stabile zweite Position ein hörbares Signal erzeugt, das dazu angepasst ist, von einem Nutzer oder von einer externen Vorrichtung wahrgenommen zu werden, **dadurch gekennzeichnet, dass** das Bimetallelement (30a, 30b) an mindestens einer Wand (17, 25) der Aufnahme (6) anschlägt, um das hörbare Signal auszugeben.

2. Kochgefäß (1) nach Anspruch 1, **dadurch gekennzeichnet, dass** das mindestens eine Bimetallelement (30a, 30b) frei in der Aufnahme (6) zum Empfang ist.

3. Kochgefäß (1) nach einem der vorstehenden Ansprüche, **dadurch gekennzeichnet, dass** das mindestens eine Bimetallelement (30a, 30b) die Form eines Kreisteils annimmt.

4. Kochgefäß (1) nach einem der vorstehenden Ansprüche, **dadurch gekennzeichnet, dass** der Boden (3) mindestens zwei Bimetallelemente (30a, 30b) umfasst, die bei zwei unterschiedlichen vorbestimmten Temperaturen von ihrer kalten stabilen ersten Position in ihre heiße stabile zweite Postion übergehen.

5. Kochgefäß (1) nach einem der vorstehenden Ansprüche, **dadurch gekennzeichnet, dass** die Aufnahme (6) durch einen Hohlraum (10) gebildet ist, der von einer Platte (20a, 20b, 20c, 20d) verschlossen wird.

6. Kochgefäß (1) nach Anspruch 5, **dadurch gekennzeichnet, dass** die Platte (20a, 20b, 20c, 20d) auf einer unteren Seite (7) des Bodens angeordnet ist.

7. Kochgefäß (1) nach einem der Ansprüche 5 bis 6, **dadurch gekennzeichnet, dass** die Platte (20a) einen Umfangsrand (22) umfasst, der sich senkrecht zur Platte (20a) erstreckt, wobei der Umfangsrand (22) ein Kopplungsteil (13) umfasst, das dazu vorgesehen ist, mit einem Bereich (12) des Hohlraums (10) zusammenzuwirken, der ein hinterschnittenes Profil umfasst.

8. Kochgefäß (1) nach einem der Ansprüche 5 bis 6, **dadurch gekennzeichnet, dass** die Platte (20b) Lochungen (24) umfasst und der Boden (3) Stifte (15) umfasst, wobei die Lochungen (24) dazu vorgesehen sind, auf den Stiften (15) angebracht zu werden, um die Platte (20b) durch einen Schlagvorgang auf dem Boden (3) zu befestigen.

9. Kochgefäß (1) nach einem der Ansprüche 5 bis 6, **dadurch gekennzeichnet, dass** die Platte (20c) durch einen Schweißvorgang auf dem Boden (3) befestigt wird.

10. Kochgefäß (1) nach einem der Ansprüche 5 bis 6, **dadurch gekennzeichnet, dass** die Platte (20d) Kopplungslochungen (16) umfasst, wobei die Platte (20d) dazu vorgesehen ist, durch einen Schlagvorgang derart in den Boden (3) eingelassen zu werden, dass die Kopplungslochungen (16) mit Material des Bodens (3) gefüllt werden.

11. Kochgefäß (1) nach einem der Ansprüche 1 bis 10, **dadurch gekennzeichnet, dass** es eine Pfanne, ein Stieltopf, eine Schmorpfanne, ein Kochtopf oder ein Schnellkochtopf ist.

12. Kochgefäß (1) nach einem der Ansprüche 1 bis 11, **dadurch gekennzeichnet, dass** die externe Vorrichtung ein Smartphone ist.

## Claims

1. Cooking vessel (1) comprising a cap (2) equipped with a bottom (3), the bottom (3) comprising a housing (6) receiving at least one bimetallic element (30a, 30b) taking a cold stable first position when the temperature is below a predetermined temperature and toggling to a hot stable second position when the temperature is above the predetermined temperature and vice versa, the transition from the first stable position to the second stable position generating an audible signal designed to be perceived by a user or by an external device, **characterised in that** the at least one bimetallic element (30a, 30b) strikes at least one wall (17, 25) of the housing (6) to emit the audible signal.

2. Cooking vessel (1) according to claim 1, **characterised in that** the at least one bimetallic element (30a, 30b) moves freely in the receiving housing (6).

3. Cooking vessel (1) according to any of the preceding claims, **characterised in that** the at least one bimetallic element (30a, 30b) takes the form of part of a sphere.

4. Cooking vessel (1) according to any of the preceding claims, **characterised in that** the bottom (3) comprises at least two bimetallic elements (30a, 30b) toggling from their cold stable first position to their hot stable second position at two different predetermined temperatures.

5. Cooking vessel (1) according to any of the preceding claims, **characterised in that** the housing (6) is formed by a cavity (10) closed by a plate (20a, 20b, 20c, 20d).

6. Cooking vessel (1) according to claim 5, **characterised in that** the plate (20a, 20b, 20c, 20d) is arranged on an underside (7) of the bottom.

7. Cooking vessel (1) according to any of claims 5 to 6, **characterised in that** the plate (20a) comprises a peripheral edge (22) extending perpendicularly to the plate (20a), the peripheral edge (22) comprising a hooking portion (13) intended to engage with a zone (12) of the cavity (10) which comprises an undercut profile.

8. Cooking vessel (1) according to any of claims 5 to 6, **characterised in that** the plate (20b) comprises perforations (24) and the bottom (3) comprises studs (15), the perforations (24) being intended to be assembled onto the studs (15) in order to affix the plate (20b) to the bottom (3) through a stamping operation.

9. Cooking vessel (1) according to any of claims 5 to 6, **characterised in that** the plate (20c) is affixed to the bottom (3) by a welding operation.

10. Cooking vessel (1) according to any of claims 5 to 6, **characterised in that** the plate (20d) comprises hooking perforations (16), the plate (20d) being intended to be embedded in the bottom (3) by a stamping operation so that the hooking perforations (16) are filled with material of the bottom (3).

11. Cooking vessel (1) according to any of claims 1 to 10, **characterised in that** it is a frying pan, a saucepan, a saute pot, a pot or a pressure cooker.

12. Cooking vessel (1) according to any of claims 1 to 11, **characterised in that** the external device is a smartphone.
